(19) Europäisches Patentamt

European Patent Office

Office européen des brevets

(11) **EP 1 650 707 A2**

(12) **EUROPEAN PATENT APPLICATION**

(43) Date of publication:
 **26.04.2006 Bulletin 2006/17**

(51) Int Cl.:
 ***G06T 5/00*** (2006.01)

(21) Application number: **05022743.8**

(22) Date of filing: **19.10.2005**

| | |
|---|---|
| (84) Designated Contracting States:<br> **AT BE BG CH CY CZ DE DK EE ES FI FR GB GR HU IE IS IT LI LT LU LV MC NL PL PT RO SE SI SK TR**<br>Designated Extension States:<br> **AL BA HR MK YU**<br><br>(30) Priority: **22.10.2004 KR 2004084724**<br><br>(71) Applicant: **MEDISON CO., LTD.**<br> **Kangwon-do 250-870 (KR)** | (72) Inventor: **Lee, Jae Keun**<br> **Gwanak-gu,**<br> **Seoul 151-812 (KR)**<br><br>(74) Representative: **Lorenz, Werner**<br> **Lorenz & Kollegen**<br> **Patent- und Rechtsanwaltskanzlei**<br> **Alte Ulmer Strasse 2**<br> **89522 Heidenheim (DE)** |

(54) **Apparatus and method for enhancing quality of sectional plane image in 3 dimensional ultrasound data**

(57)   The present invention relates to an apparatus for enhancing the quality of a sectional plane image in a 3-dimensional ultrasound image. The apparatus for enhancing a sectional plane image in a 3-dimensional ultrasound image, includes: a display region calculation unit for selecting a reference sectional plane image in 3D ultrasound data of a target object received from a probe and calculating a display region to display the selected reference sectional plane image; a geometric look-up table storage unit for storing indices matched with 3-dimensional Cartesian coordinates of a screen displaying the target object and conical coordinates corresponding to the indices; a scan conversion unit for scan-converting conical coordinates of a plurality of sectional plane images with offsets between the sectional plane images adjusted to a predetermined value into Cartesian coordinates by referencing the geometric look-up table storage unit; a rendering unit for rendering the scan-converted sectional plane images including the reference sectional plane image; and a sectional plane image compound unit for compounding a predetermined number of sectional plane images in which the reference sectional plane image is positioned at a center thereof.

**EP 1 650 707 A2**

## Description

The present invention generally relates to an ultrasound diagnostic system, and more particularly to an apparatus and a method for enhancing the quality of a sectional plane image in 3D ultrasound data of a target object in an ultrasound diagnostic system.

Generally, a 3-dimensional (3D) ultrasound diagnostic system is medical equipment for providing clinical information such as spatial information and anatomical information, which cannot be provided from a conventional 2-dimensional image. The 3D ultrasound diagnostic device acquires the 3D ultrasound data of a target object by using a probe. The 3D ultrasound diagnostic device then displays a 3D image of the target object on a screen of a display device by converting conical coordinates of the acquired data to Cartesian coordinates suitable for display (scan conversion).

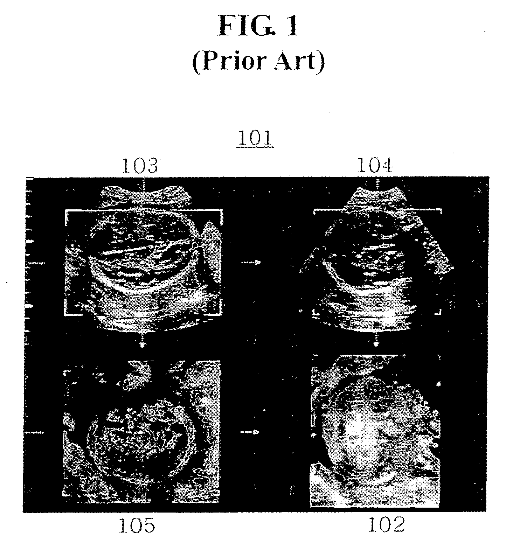

A region displaying ultrasound images of the target object on the screen of a display device through the scan conversion and rendering is referred to as a "view." An example of the view is illustrated in Fig. 1. The view 101 includes: a 3D ultrasound image 102 of the target object; a 2D ultrasound sectional plane image 103 for a coronal view representing a front side of 3D ultrasound image 103; a 2D ultrasound sectional plane image 104 for a sagital view representing a lateral side of 3D ultrasound image 103; and a 2D ultrasound sectional plane image 105 for an axial view representing a top side of 3D ultrasound image 102.

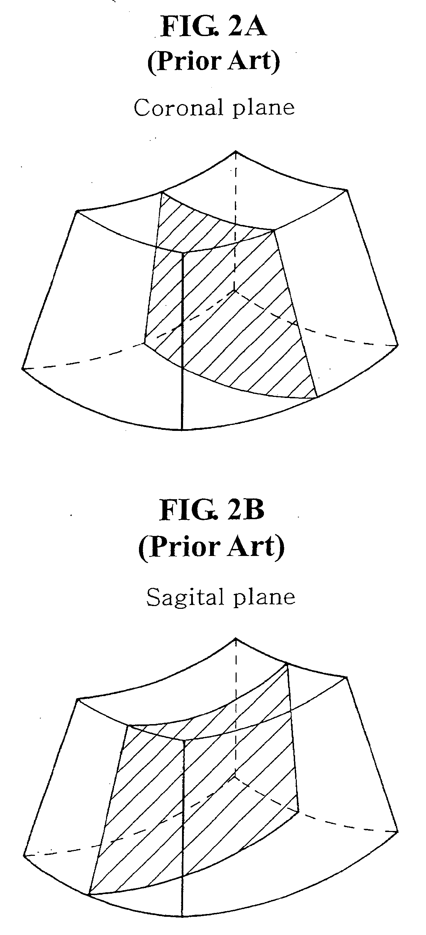

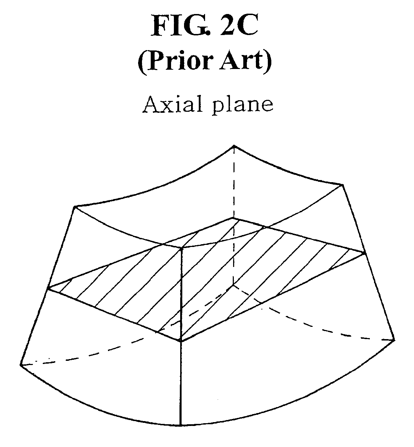

Figs. 2A to 2C show sectional planes for the coronal, sagital and axial views in the 3D ultrasound image of the target object. A solid line represents the target object and dashed planes represent the sectional planes for the coronal, sagital and axial views in Figs. 2A, 2B and 2C, respectively.

The resolution of the 3D data cannot be increased due to the limitation of a 3D data acquisition process. Also, since the sectional plane image is a virtual image acquired through a reconstruction of the 3D data, the sectional plane image is not suitable for diagnostic purposes. Furthermore, the sectional plane image for the axial view, which is important in diagnosing an expectant mother, has a lower resolution than those of the sectional images for the coronal and sagital views. Thus, it is required to enhance the quality of the sectional image for the axial view.

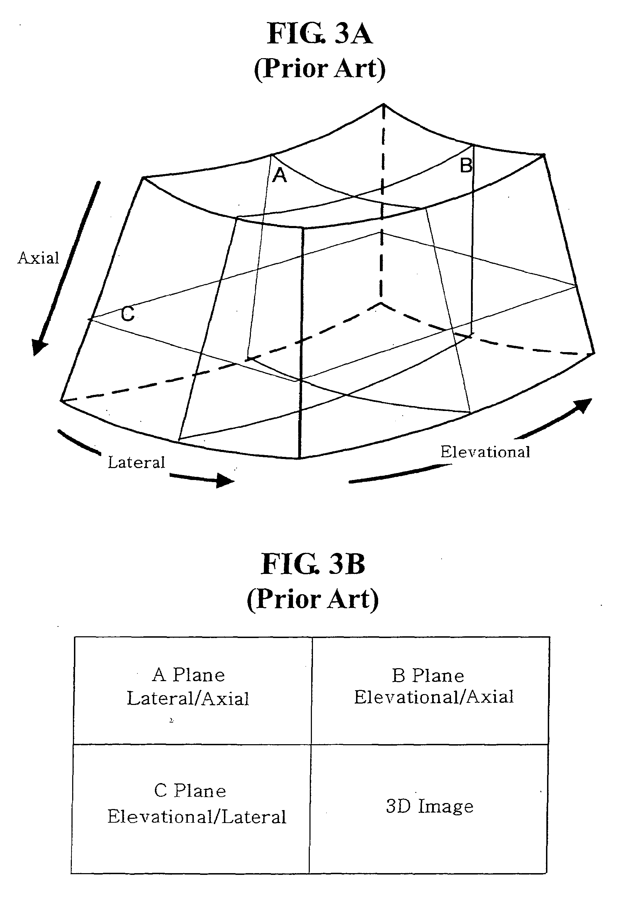

Figs. 3A and 3B are schematic diagrams illustrating a method of acquiring sectional plane images for the coronal, sagital and axial views in the 3D ultrasound image.

As shown in Fig. 3A, the 3D ultrasound image is formed in axial, lateral and elevational directions. The A, B and C sectional plane images are acquired in directions shown in Fig. 3B. Since the 3D ultrasound data are acquired in the order of an axial direction, a lateral direction and an elevational direction by the ultrasound equipment, the C sectional plane image for the axial view has the lowest resolution.

In order to enhance the quality of the sectional plane image, a post-processing using an image processing has been researched and used in the art. The speckle noise can be removed from the ultrasound image through the conventional post-processing. However, a problem may arise in that the ultrasound image with the speckle noise, which is removed according to the conventional post-processing, produces uncomfortable and unnatural feelings.

It is an objective of the present invention to provide an apparatus and a method for enhancing the quality of a sectional plane image in a 3D ultrasound image by setting a reference sectional plane image and compounding the reference sectional image with neighboring sectional plane images.

In accordance with one aspect of the present invention, there is provided an apparatus for enhancing a sectional plane image in a 3-dimensional ultrasound image, including: a display region calculation unit for selecting a reference sectional plane image in 3D ultrasound data of a target object received from a probe and calculating a display region to display the selected reference sectional plane image; a geometric look-up table storage unit for storing indices matched with 3-demensional Cartesian coordinates of a screen displaying the target object and conical coordinates corresponding to indices; a scan conversion unit for scan-converting conical coordinates of a plurality of sectional plane images with offsets between the sectional plane images adjusted to a predetermined value into Cartesian coordinates by referencing the geometric look-up table storage unit; a rendering unit for rendering the scan-converted sectional plane images including the reference sectional plane image; and a sectional plane image compound unit for compounding a predetermined number of sectional plane images in which the reference sectional plane image is positioned at a center thereof.

In accordance with another aspect of the present invention, there is provided a method for enhancing quality of a sectional plane image in a 3-dimensional (3D) ultrasound image of a target object, comprising the steps of: a) storing indices of 3D data matched with Cartesian coordinates of a screen in a display device to display a ultrasound image of the target object and conical coordinates corresponding to the indices; b) selecting a reference sectional plane image in 3D data of a target object and calculating a display region to display the selected reference sectional plane image; c) scan-converting conical coordinates of a plurality of sectional plane images with offsets adjusted to a predetermined value into Cartesian coordinates by referencing the indices; d) rendering the scan-converted sectional plane images; and e) compounding a predetermined number of sectional plane images in which the reference sectional plane image is positioned at a center thereof.

The above and other objects and features of the present invention will become apparent from the following description of preferred embodiments given in conjunction with the accompanying drawings, in which:

Fig. 1 is a photograph showing a 3D ultrasound image and sectional plane images of a target object according to a conventional 3D ultrasound diagnostic device;

Figs. 2A to 2C are schematic diagrams showing sectional planes in a 3D ultrasound image;

Figs. 3A and 3B are schematic diagrams illustrating a process of acquiring A, B and C sectional plane images in the 3D ultrasound image;

Fig. 4A is a schematic diagram showing an ultrasound diagnostic system constructed in accordance with the present invention;

Fig. 4B is a block diagram showing an ultrasound image processing device included in a body of an ultrasound diagnostic system constructed in accordance with the present invention;

Figs. 5A to 5C are diagrams illustrating the relationships between the Cartesian coordinates and the conical coordinates;

Fig. 6A is a photograph showing a sectional plane image before removing a speckle noise;

Fig. 6B is a photograph showing a sectional plane image with a speckle noise removed in accordance with the present invention; and

Fig. 7 is a flow chart showing a process of enhancing the quality of a sectional plane image in the 3D ultrasound image in accordance with the present invention.

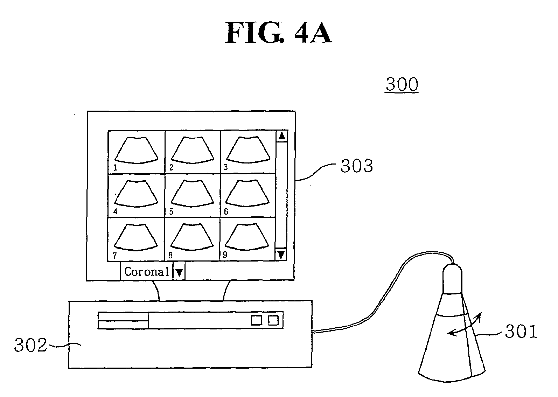

Fig. 4A is a diagram illustrating an ultrasound diagnostic system, which is constructed in accordance with the preferred embodiment of the present invention.

As illustrated in Fig. 4A, an ultrasound diagnostic system 300 includes a probe 301, a display device 303 and a body 302. The probe 301 is used to acquire 3D ultrasound data from a target object to be displayed. A mechanical scanning process (scan by moving a mechanical arm or rotating a stepping motor) or a hand-free process (scan by a user's hand) may be applied to the probe 301. The display device 303 (e.g., a monitor) is used to display the ultrasound data acquired from the probe 301. It should be noted herein that as long as the display device can display a 3D ultrasound image in accordance with the present invention, any type of display device may be used. The body 302 includes an ultrasound image processing device 310 for enhancing the quality of the sectional plane image in the 3D ultrasound image.

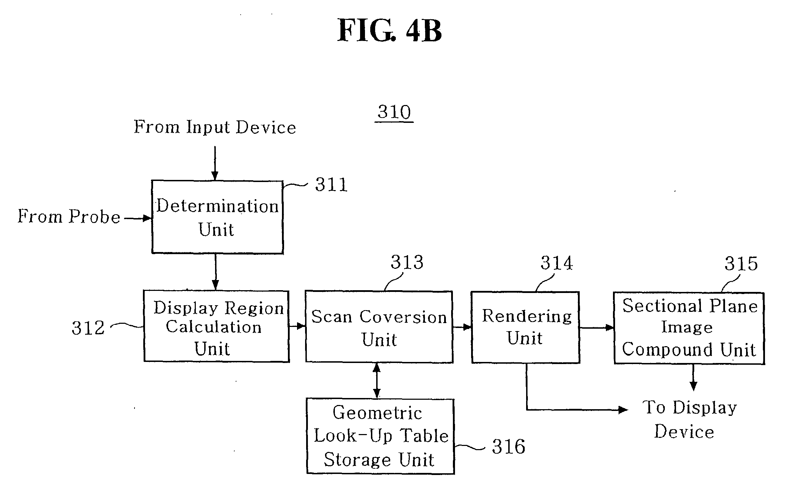

Fig. 4B is a block diagram showing the ultrasound image processing device 310 included in the body in accordance with the preferred embodiment of the present invention. As shown therein, the ultrasound image processing device 310 includes: a determination unit 311; a display region calculation unit 312; a scan conversion unit 313; a rendering unit 314; a sectional plane image compound unit 315; and a geometric look-up table storage unit 316.

The operation of each element configuring the ultrasound image processing device 310 will be described below in detail.

The determination unit 311 checks whether the 3D ultrasound data of the target object are received from the probe 301. If it is determined that the 3D ultrasound data are received, the determination unit 311 transmits the 3D ultrasound data to the display region calculation unit 312. Also, the determination unit 311 stores sectional plane image compound information inputted from a user input device (not denoted). The sectional plane image compound information, which is stored in the determination unit 311, is referenced by the display region calculation unit 312, the scan conversion unit 313, the rendering unit 314 and the sectional plane image compound unit 315.

The display region calculation unit 312 selects a reference sectional plane image from the 3D ultrasound data of the target object. Generally, sectional plane images, which exist in the center position of the 3D ultrasound image in axial, lateral and elevational directions, are selected as reference sectional plane images for coronal, sagital and axial views, respectively. Also, the reference sectional plane images can be arbitrarily selected from the 3D ultrasound data of the target object by using a user reference slide controller. The display region calculation unit 312 calculates the Cartesian coordinates in a displayed region in which the selected reference sectional plane image is substantially displayed.

The scan conversion unit 313 performs scan conversion for converting the conical coordinates of the reference sectional plane image to the Cartesian coordinates calculated in the display region calculation unit 312. In order to perform the scan conversion, a complicated mathematical operation such as an arc tangent operation should be carried out. Since the arc tangent operation for the whole 3D data of the target object should be carried out, it consumes a long operation time. Therefore, the target object cannot be displayed in real time.

In order to rapidly perform the scan conversion, a geometric look-up table, which stores indices matched with the 3D Cartesian coordinates of the screen and arc tangent operation resulting values corresponding to each index, is produced. The geometric look-up table is stored in the geometric look-up table storage unit 316.

The process for generating the geometric look-up table will be described below.

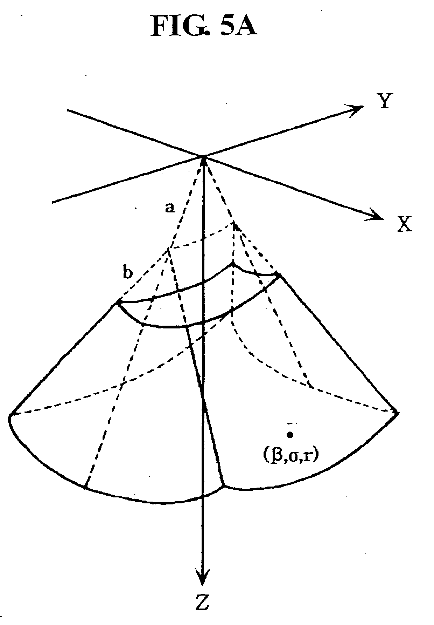

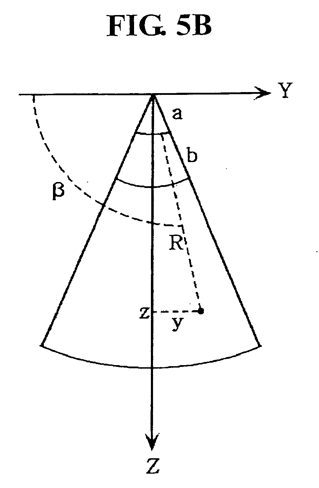

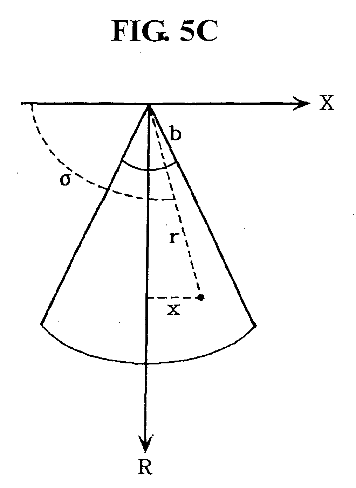

Fig. 5A is a diagram showing the relationship between the conical coordinates and the Cartesian coordinates. Fig. 5B is a diagram illustrating arbitrary 3D data shown in Fig. 4A in Y-Z Cartesian coordinates. Fig. 5C is a diagram illustrating arbitrary 3D data shown in Fig. 5A in X-R Cartesian coordinates. The X, Y and Z axes consist of 3D Cartesian coordinates in which the ultrasound image of the target object can be displayed. The R axis is an axis perpendicular to the X axis from a portion in which the 3D ultrasound image is acquired.

Accurate conical coordinates of (β,σ,r), in which 3D data to be scan-converted from the Cartesian coordinates of the 3D data are located, can be obtained as the following Equation 1.

$$R = \sqrt{y^2 + z^2} - a$$

$$\beta = \frac{\frac{\pi}{2} + \tan^{-1}(\frac{y}{z})}{}, \quad \sigma = \frac{\frac{\pi}{2} + \tan^{-1}(\frac{x}{R})}{}, \quad r = \sqrt{x^2 + R^2} - b \qquad - \text{Eq. 1}$$

wherein β represents a scan viewing angle, which corresponds to a swing angle range of a stepping motor in the probe, ranging from 0° to 180°; σ represents a probe viewing angle, which corresponds to a width angle range of a 2D image scanned from probe 301, ranging from 0° to 180°; r represents a distance from a portion in which the ultrasound image is acquired to arbitrary 3D data; a represents a distance from an angular point of the scan viewing angle to an angular point of the probe viewing angle; and b represents a distance from an angular point of the probe viewing point to the portion in which the ultrasound image is acquired. Also, x, y and z represent arbitrary values on the X, Y and Z axes, respectively.

In order to obtain the conical coordinates of β and σ from Equation 1, the arc tangent operations of $\tan^{-1}$ (y/z) and $\tan^{-1}$ (x/R) have to be first performed. x, y and z in the arc tangent equation are set values corresponding to the Cartesian coordinates of the screen of the display device. R is calculated from the x, y and z as shown in Equation 1. Tables 1A and 1B, which are provided below, show calculations of R and r. After obtaining R by performing parallel processing for arbitrary 4 numbers of y existing in the Y axis and arbitrary 4 numbers of z existing in the Z axis, r is calculated by performing parallel processing for arbitrary 4 numbers of z existing in the X axis and r. When x, y and z are processed by the parallel processing (as described above), the speed for the scan conversion of the 3D data can be improved.

[Table 1A]

| m1 = [y4, y3, y2, y1] | Input y to m1 |
|---|---|
| m5 = m1 × [y4, y3, y2, y1] | m5 is a square of y |
| m2 = [z4, z3, z2, z1] | Input z to m2 |
| m6 = m2 × [z4, z3, z2, z1] | m6 is a square of z |
| m7 = m5 + m6 | m7 is equal to y2 + z2 |
| m3 = sqrt(m7) | m3 is a square root of y2 + z2 |
| m8 = m3-a | m8 is [R4, R3, R2, R1] |

[Table 1B]

| m0 = [x4, x3, x2, x1] | Input x to m0 |
|---|---|
| m4 = m0 × [x4, x3, x2, x1] | m4 is a square of x |
| m5 = [R4, R3, R2, R1] | Input R to m5 |
| m5 = m5 × [R4, R3, R2, R1] | m5 is a square of R |
| m9 = m4 + m5 | m9 is equal to x2 + R2 |
| m10 = sqrt(m9) | m10 is a square root of x2 + R2 |
| m11 = m10-b | m11 is [r4, r3, r2, r1] |

As shown above, the arc tangent operations of $\tan^{-1}$ (y/z) and $\tan^{-1}$ (x/R) are calculated according to the values of x, y and z and the values of R corresponding thereto. As indexes corresponding to (y/z) and (x/R) are given to the resulting values of the calculated arc tangent operation, the geometric look-up table is generated. The geometric look-up table includes:

$$\text{indices representing } (\underline{\frac{y_1}{z_1}}), (\underline{\frac{y_2}{z_2}}), \ldots, (\underline{\frac{y_n}{z_n}});$$

$$\text{angles of } \tan\text{-}1(\underline{\frac{y_1}{z_1}}), \tan\text{-}1(\underline{\frac{y_2}{z_2}}), \ldots, \tan\text{-}1(\underline{\frac{y_n}{z_n}});$$

$$\text{indices representing } (\underline{\frac{x_1}{R_1}}), (\underline{\frac{x_2}{R_2}}), \ldots, (\underline{\frac{x_n}{R_n}});$$

and

$$\text{angles of } \tan\text{-}1(\underline{\frac{x_1}{R_1}}), \tan\text{-}1(\underline{\frac{x_2}{R_2}}), \ldots, \tan\text{-}1(\underline{\frac{x_n}{R_n}}).$$

The scan conversion unit 313 retrieves the index matched with the 3D conical coordinates and the resulting values of the arc tangent operations corresponding to the index by referencing the geometric look-up table stored in the geometric look-up table storage unit 316, which is previously produced. As the retrieved resulting value of the arc tangent operation is applied to Equation 1, the conical coordinates of (β1, σ1, r1), (β2, σ2, r2), ... , (βn, σn, rn) corresponding to the Cartesian coordinates of (x1, y1, z1), (x2, y2, z2), ... , (xn, yn, zn) of the display region can be acquired.

Next, the scan conversion unit 313 converts the conical coordinates of the 3D data, which include the reference sectional plane images and a plurality of sectional plane images with offset adjusted with respect to the reference sectional plane image, to the 3D Cartesian coordinates of display region. It then outputs the converted 3D data, the conical coordinates in which the 3D data are located, and the index retrieved from the geometric look-up table storage unit 316.

As mentioned above, the scan conversion unit 313 performs the scan conversion after finding the conical coordinates in which the 3D data of the target object are located. This can be done by performing the parallel processing of x, y, z and R, which are previously set, by using the resulting values of the arc tangent operation stored in the geometric look-up table storage unit 316 (instead of directly performing the arc tangent operation requiring a long operation time). Thus, the speed of scan-converting the conical coordinates of the 3D data to the 3D Cartesian coordinates of display region can be improved.

The method of adjusting the offset of the sectional plane image adjacent to the reference sectional plane image is set by referring to a size of the screen substantially displaying the sectional plane images. Herein, the offset is a distance between the sectional plane images. For example, if the size of the screen is of 200 × 200 (width × height) pixels and the size of the 3D volume data is of 800 × 600 × 400 (axial × lateral × elevational) pixels, the 3D volume data is adjusted to fit a axial size (800 pixels) of the 3D volume data, which is the largest value, to a size (200 pixels) of the screen. Namely, the 3D data volume becomes scaled down to a ratio of 4:1. Also, another sizes of the 3D data volume become scaled down from 600 × 400 (lateral × elevational) pixels to 150 × 100 pixels. This is so that the 3D volume data is displayed with a size of 200 × 150 × 100 pixels on the screen.

When the ratio of the size of the 3D ultrasound data to that of the screen is relatively large, the offset is set to a small value. When the ratio of the size of the 3D ultrasound data to that of the screen is relatively small, the offset is set to a large value in accordance with the present invention. The reason that the offset is adjusted is to obtain a compound sectional plane image having a constant resolution according to the ratio of size of the 3D ultrasound data to that of the screen.

The rendering unit 314 performs a rendering process for the 3D data including the reference sectional plane image and the plurality of sectional plane images received from the scan conversion unit 313. The process for rendering the 3D data is carried out in a manner identical to a tri-linear interpolation process, which is typically used in the art. As such, a detailed explanation will be omitted herein.

The sectional plane image compound unit 315 compounds a multiplicity of sectional plane images, in which the reference sectional plane image is positioned at the center thereof, received from the rendering unit 314. The operation of the sectional plane image compound unit 315 will be described below in detail.

The sectional plane image compound unit 315 compounds the multiplicity of sectional plane images by using a Gaussian distribution filter having a high weight for the brightness of the sectional plane image nearer to the reference sectional plane image and a low weight for the brightness of the sectional plane images farther from the reference sectional plane image. If the image compound process is carried out through using an average brightness value of the multiplicity of sectional plane images, the compounded sectional plane image may be distorted against the original sectional plane image. However, the use of the Gaussian filter in compounding the sectional plane images in accordance with the present invention may reduce or remove the distortion of the compounded sectional plane image and the speckle noise to a substantial degree. For example, when the image compound process is carried out with five neighboring sectional plane images A, B, C, D and E (wherein C is the reference sectional plane image, B and D are the sectional plane images nearer to the reference sectional plane image, and A and E are the sectional plane images farther from the reference image), the weight of the brightness of each sectional plane image may be given as $(A+B\times2+C\times4+D\times2+E)/10$. Therefore, the compounded sectional plane image, which is similar to the original image, can be obtained.

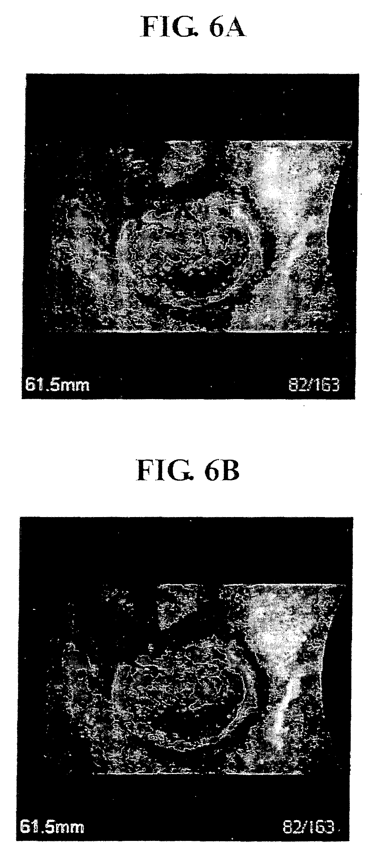

The operation of the image processing for enhancing the ultrasound sectional plane image quality will be described in view of Figs. 4A to 7.

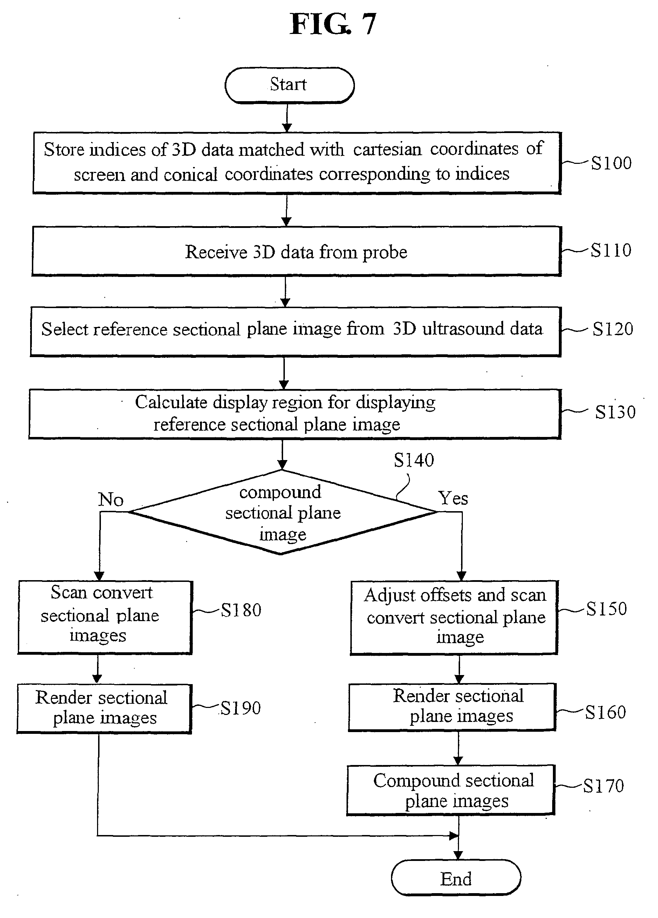

Fig. 7 is a flow chart showing a process of enhancing the quality of the sectional plane image in the 3D ultrasound image in accordance with the present invention.

Referring to Fig. 7, indices of 3D data matched with Cartesian coordinates of a screen and the resulting values of the arc tangent operation corresponding to the indices are stored in the geometric look-up table storage unit 316. This is in order to rapidly perform the scan conversion in the scan conversion unit 313 at step S100.

If the 3D data are received through the probe and the sectional plane image compound information representing whether the sectional plane image compound is carried out is inputted from the user in the determination unit 311 at step S110, the display region calculation unit 312 selects the reference sectional plane image from the 3D data at step S120 and calculates the display region for displaying the reference sectional plane image at step S 130.

If it is determined to compound the sectional plane images on the basis of the sectional plane image compound information at step S 140, the scan conversion unit 313 converts conical coordinates of the reference sectional plane image and neighboring sectional plane images with offset adjusted with respect to the reference sectional plane image to Cartesian coordinates by referencing the geometric look-up table stored in the geometric look-up storage unit 316 at step S150.

The rendering unit 314 performs a rendering process for the scan converted sectional plane images at step S160.

The sectional plane image compound unit 315 compounds the rendered sectional plane images by using the Gaussian filter at step S 170.

If it is determined not to compound the sectional plane images on the basis of the sectional plane image compound information at step S 140, the scan conversion unit 313 converts the conical coordinates of the reference sectional plane image into Cartesian coordinates at step S 180.

The rendering unit 314 renders the scan converted reference sectional plane image at step S190.

As the multiplicity of sectional plane images, in which the reference sectional plane image is positioned at the center thereof, are compounded in accordance with the present invention, the speckle noise can be removed from the ultrasound image, thereby obtaining a natural ultrasound image.

While the present invention has been described and illustrated with respect to a preferred embodiment of the invention, it will be apparent to those skilled in the art that variations and modifications are possible without deviating from the broad principles and teachings of the present invention which should be limited solely by the scope of the claims appended hereto.

**Claims**

1.  An apparatus for enhancing a sectional plane image in a 3-dimensional ultrasound image, comprising:

    a display region calculation unit for selecting a reference sectional plane image in 3D ultrasound data of a target object received from a probe and calculating a display region to display the selected reference sectional plane image;
    a geometric look-up table storage unit for storing indices matched with 3-dimensional Cartesian coordinates of a screen displaying the target object and conical coordinates corresponding to the indices;
    a scan conversion unit for scan-converting conical coordinates of a plurality of sectional plane images with offsets between the sectional plane images adjusted to a predetermined value into Cartesian coordinates by referencing the geometric look-up table storage unit;
a rendering unit for rendering the scan-converted sectional plane images including the reference sectional plane image; and
a sectional plane image compound unit for compounding a predetermined number of sectional plane images in which the reference sectional plane image is positioned at a center thereof.

2. The apparatus as recited in Claim 1, wherein the predetermined value of the offset is determined according to a ratio of a volume size of the 3D data to a size of a screen displaying the sectional plane images.

3. The apparatus as recited in Claim 1, wherein the sectional plane compound unit compounds the sectional plane images by using a filter having a high weight for the brightness of the sectional plane images nearer to the reference sectional plane image and a low weight for the brightness of the sectional plane images farther from the reference sectional plane image.

4. The apparatus as recited in Claim 3, wherein the filter is a Gaussian filter.

5. The apparatus as recited in Claim 1, further comprising a sectional plane image determination unit for receiving image compound information from a user.

6. A method for enhancing quality of a sectional plane image in a 3-dimensional (3D) ultrasound image of a target object, comprising the steps of:

a) storing indices of 3D data matched with Cartesian coordinates of a screen in a display device to display a ultrasound image of the target object and conical coordinates corresponding to the indices;
b) selecting a reference sectional plane image in 3D data of a target object and calculating a display region to display the selected reference sectional plane image;
c) scan-converting conical coordinates of a plurality of sectional plane images with offsets adjusted to a predetermined value into Cartesian coordinates by referencing the indices;
d) rendering the scan-converted sectional plane images; and
e) compounding a predetermined number of sectional plane images in which the reference sectional plane image is positioned at a center thereof.

7. The method as recited in Claim 6, wherein the predetermined value of the offset is determined according to a ratio of a volume size of the 3D ultrasound data to a size of a screen displaying the sectional plane images.

8. The method as recited in Claim 6, wherein the step e) is performed by using a filter having a high weight for the brightness of the sectional plane images nearer to the reference sectional plane image and a low weight for the brightness of the sectional plane images farther from the reference sectional plane image.

9. The method as recited in claim 7, wherein the filter is a Gaussian filter.

# FIG. 1
## (Prior Art)

101

103      104

105      102

# FIG. 2A
# (Prior Art)

Coronal plane

# FIG. 2B
# (Prior Art)

Sagital plane

# FIG. 2C
# (Prior Art)

Axial plane

# FIG. 3A
# (Prior Art)

# FIG. 3B
# (Prior Art)

| A Plane<br>Lateral/Axial | B Plane<br>Elevational/Axial |
|---|---|
| C Plane<br>Elevational/Lateral | 3D Image |

# FIG. 4A

# FIG. 4B

From Input Device

310

From Probe → Determination Unit · 311

Display Region Calculation Unit 312

Scan Coversion Unit 313

Rendering Unit 314

Sectional Plane Image Compound Unit 315

Geometric Look-Up Table Storage Unit 316

To Display Device

# FIG. 5A

# FIG. 5B

# FIG. 5C

## FIG. 6A

61.5mm      82/163

## FIG. 6B

61.5mm      82/163

# FIG. 7

```
                    ┌─────────────┐
                    │    Start    │
                    └─────────────┘
                           │
                           ▼
┌───────────────────────────────────────────────────────────┐
│  Store indices of 3D data matched with cartesian coordinates of │─── S100
│  screen and conical coordinates corresponding to indices   │
└───────────────────────────────────────────────────────────┘
                           │
                           ▼
┌───────────────────────────────────────────────────────────┐
│              Receive 3D data from probe                    │─── S110
└───────────────────────────────────────────────────────────┘
                           │
                           ▼
┌───────────────────────────────────────────────────────────┐
│  Select reference sectional plane image from 3D ultrasound data │─── S120
└───────────────────────────────────────────────────────────┘
                           │
                           ▼
┌───────────────────────────────────────────────────────────┐
│          Calculate display region for displaying          │─── S130
│             reference sectional plane image               │
└───────────────────────────────────────────────────────────┘
                           │
                           ▼                    S140
              ┌────────────────────────┐
      No      ╱      compound            ╲    Yes
    ◄─────────    sectional plane           ─────────►
              ╲         image             ╱
              └────────────────────────┘
         │                                      │
         ▼                                      ▼
┌──────────────────┐              ┌──────────────────────┐
│  Scan convert    │              │   Adjust offsets and scan │
│  sectional plane │─── S180      │   convert sectional plane │─── S150
│     images       │              │         image            │
└──────────────────┘              └──────────────────────┘
         │                                      │
         ▼                                      ▼
┌──────────────────┐              ┌──────────────────────┐
│  Render sectional│─── S190      │    Render sectional   │─── S160
│   plane images   │              │     plane images      │
└──────────────────┘              └──────────────────────┘
         │                                      │
         │                                      ▼
         │                        ┌──────────────────────┐
         │                        │  Compound sectional   │─── S170
         │                        │    plane images       │
         │                        └──────────────────────┘
         │                                      │
         └──────────────────►──────────────────┤
                                                ▼
                                      ┌─────────────┐
                                      │     End     │
                                      └─────────────┘
```